# EUROPÄISCHE PATENTSCHRIFT

(11) **EP 2 148 558 B1**
(45) Veröffentlichungstag und Bekanntmachung des Hinweises auf die Patenterteilung: **23.03.2011**
(21) Anmeldenummer: 08750304.1
(22) Anmeldetag: 15.05.2008
(51) Int. Cl.: A01B 69/00, A01D 34/00, G05D 1/02

(54) **ROBOTER-FAHRZEUG MIT ANTRIEBSMITTELN SOWIE VERFAHREN ZUM ANSTEUERN VON ANTRIEBSMITTELN**
ROBOTIC VEHICLE WITH DRIVE MEANS AND METHOD FOR ACTIVATING DRIVE MEANS
VÉHICULE ROBOT POURVU DE MOYENS D'ENTRAÎNEMENT ET PROCÉDÉ D'ACTIONNEMENT DE MOYENS D'ENTRAÎNEMENT

(30) Priorität: 16.05.2007 DE 102007023157
(43) Veröffentlichungstag der Anmeldung: 03.02.2010
(73) Patentinhaber: Robert Bosch GmbH, 70442 Stuttgart (DE)
(72) Erfinder: BIBER, Peter, 72070 Tuebingen (DE); KOCH, Christoph, 70178 Stuttgart (DE)
(86) Internationale Anmeldenummer: PCT/EP2008/055968
(87) Internationale Veröffentlichungsnummer: WO 2008/138967

(56) Entgegenhaltungen:
- EP-A- 1 704 766
- GB-A- 2 200 446
- JP-A- 2 277 105
- US-A- 5 622 236

## Beschreibung

### Stand der Technik

Die Erfindung betrifft ein für einen selbständigen Betrieb ausgebildetes Roboter-Fahrzeug gemäß dem Oberbegriff des Anspruchs 1 sowie ein Verfahren zum Ansteuern von Antriebsmitteln zum Bewegen eines für einen selbständigen Betrieb ausgebildeten Roboter-Fahrzeugs auf einem Untergrund gemäß dem Oberbegriff des Anspruchs 19.

Bei autonomen, d.h. für einen selbständigen Betrieb ausgebildeten Rasenmähern besteht das Problem, das die Arbeitsfläche, nämlich eine Rasenfläche meist nicht von einer festen Begrenzung umgeben ist, die als klar erkennbare Grenze zur Orientierung des Rasenmähers dienen könnte. Insofern ist es bei Rasenmähern im Vergleich zu beispielsweise Haushaltsrobotern schwierig, geeignete Ansteuerlösungen zu realisieren. Erschwert wird dieses Problem dadurch, das Rasenflächen meist eine unregelmäßige Außenkontur aufweisen. Um zu verhindern, dass der Rasenmäher die Rasenfläche während des selbständigen Betriebs verlässt, ist es bekannt, den Rasenmäher entlang eines unter der Rasenfläche vergrabenen, stromdurchflossenen Leiters zu führen. Die Installation eines derartigen Führungsdrahtes ist jedoch sehr aufwendig und in der Regel nicht praktikabel.

Aus der DE 199 32 552 A1 bekannt, den Rasenmäher mit einem Infrarotsensor sowie mit einem Ultraschallsensor auszustatten um die Untergrundbeschaffenheit zu analysieren. Den Sensoren ist ein Infrarotsender zum Ausstrahlen einer Infrarotstrahlung sowie ein Ultraschallsender zum Ausstrahlen von Ultraschall zugeordnet. Aufgrund der mittels der Sensoren gemessenen Intensitäten der von der Rasenfläche reflektierten Infrarotstrahlung und den von der Rasenfläche reflektierten Ultraschallwellen wird von einer Logikeinheit ermittelt, ob sich der Rasenmäher auf der Grasfläche befindet oder nicht. Auf Basis dieser Information werden dann Antriebsmittel des Rasenmähers angesteuert.

Nachteilig bei dem bekanten Rasenmäher-Fahrzeug ist es, das es aufgrund vielfältiger Reflektions- und Überlagerungserscheinung der Ultraschallwellen zu Fehlmessungen kommen kann. Zudem sind Ultraschallsensoren aufwendig aufgebaut und kostenintensiv in der Anschaffung.

Aus der EP 1 704 766 A1 ist ein Rasenmäher-Fahrzeug bekannt, das mittels von auf der Oberseite des Rasenmäher-Fahrzeugs angebrachten Infrarotsensoren den Untergrund vor dem Rasenmäher-Fahrzeug analysiert. Dabei wird die Reflektanz des Untergrundes aus der detektierten Reflexionsintensität und der Entfernung zur Messfläche (Messflecken) berechnet. Nachteilig ist dabei die Notwendigkeit die Entfernung zu messen, da dies zusätzliche Sensorkosten verursacht und schwierig robust zu realisieren ist.

### Offenbarung der Erfindung

### Technische Aufgabe

Der Erfindung liegt daher die Aufgabe zugrunde, ein für einen selbständigen Betrieb ausgebildetes Roboter-Fahrzeug vorzuschlagen, dessen Antriebsmittel zuverlässig in Abhängigkeit der Untergrundbeschaffenheit ansteuerbar sind. Ferner besteht die Aufgabe darin, ein entsprechend optimiertes Ansteuerverfahren für ein derartiges Roboter-Fahrzeug vorzuschlagen.

### Technische Lösung

Hinsichtlich des Fahrzeugs wird die Aufgabe mit den Merkmalen des Anspruchs 1 und hinsichtlich des Verfahrens mit den Merkmalen des Anspruchs 19 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren offenbarten Merkmalen. Bei angegebenen Wertebereichen sollen auch innerhalb der genannten Grenzen liegende Werte als Grenzwerte offenbart und beliebig einsetzbar sein. Zur Vermeidung von Wiederholungen sollen lediglich vorrichtungsgemäß offenbarte Merkmale auch als verfahrensgemäß offenbart gelten, und umgekehrt.

Der Erfindung liegt die Erkenntnis zugrunde, dass die Intensität einer von einem Untergrund reflektierten Lichtstrahlung aus dem sichtbaren Bereich je nach Untergrundbeschaffenheit von der Intensität einer von demselben Untergrund reflektierten Infrarotstrahlung teilweise stark abweicht. So wurde beispielsweise ermittelt, dass die Reflektivität von chlorophyllhaltiger Vegetation im nahen Infrarotbereich deutlich höher (etwa 3 bis 6 mal höher) als im sichtbaren Licht-Spektrum ist. Diese Eigenschaft unterscheidet Gras von vielen anderen Untergründen, die im Garten vorkommen können, wie z. B. Beton, Sand, Asphalt oder Erde. Die Erfindung nutzt diese Erkenntnis aus, in dem sie zusätzlich zu dem mindestens einen Sensor zum Detektieren der Intensität einer von dem Untergrund reflektierten Infrarotstrahlung mindestens einen Lichtsensor zum Detektieren der Intensität einer von dem Untergrund reflektierten Lichtstrahlung aus dem sichtbaren Spektrum vorsieht. Dabei ist gemäß dem Konzept der Erfindung vorgesehen, dass die Steuermittel (Logikeinheit) zum Ansteuern der vorzugsweise eine Lenkeinrichtung umfassenden Antriebsmittel sowohl in Abhängigkeit der gemessenen Intensität der reflektierten Infrarotstrahlung als auch in Abhängigkeit der gemessenen Intensität des reflektierten sichtbaren Lichtes ausgebildet sind, also beide Messsignale verarbeiten. Durch die Kombination mindestens eines Infrarotsensors und mindestens eines Lichtsensors ergeben sich wesentliche Vorteile. Zum einen ist es erstmals möglich, auf einen Sender zum Aussenden der mit den Sensoren erfassten Strahlung zu verzichten, da sowohl Infrarot- als auch sichtbare Strahlungskomponenten beinhaltendes Sonnenlicht als Strahlungsquelle ausgenutzt werden kann. Es ist also möglich, das Roboter-Fahrzeug senderfrei auszubilden. Es ist denkbar Sonnenlicht hierzu in einem Bereich unterhalb der Sensoren auf dem Untergrund zu leiten. Selbstverständlich ist es ebenfalls möglich zur Minimierung von Störeinflüssen mindestens einen Sender zum Aussenden einer Infrarotstrahlung und/oder einer Lichtstrahlung aus dem sichtbaren Spektrum vorzusehen. Ein weiterer Vorteil des zusätzlichen Vorsehens eines Lichtsensors besteht darin, das ein Lichtsensor im Gegensatz zu einem aus dem Stand der Technik bekannten Ultraschallsensor einfacher aufgebaut und somit als solches störunanfälliger und kostengünstiger ist. Zudem ist die eigentlich Messung von sichtbaren Lichtwellen wesentlich weniger störanfällig als die im Stand der Technik beschriebene Messung von Ultraschallwellen.

In Weiterbildung der Erfindung ist mit Vorteil vorgesehen, dass die Steuermittel die gemessene Intensität der Infrarotstrahlung und die gemessene Intensität der Lichtstrahlung miteinander verknüpfen, um ein gemeinsames Entscheidungskriterium für das Vorliegen oder NichtVorliegen einer bestimmten Untergrundbeschaffenheit zu erlangen. Beispielsweise können die Steuermittel derart ausgebildet sein, das auf das Vorliegen eines aus Gras bestehenden Untergrundes nur dann geschlossen wird, wenn die Intensität der an dem Untergrund reflektierten Infrarotstrahlung in einem gewissen Toleranzfeld liegt und gleichzeitig die Intensität der von demselben Untergrund reflektierten Lichtstrahlung in einem anderen, insbesondere niedrigeren Toleranzfeld liegt. Somit wird ein sichereres Unterscheidungskriterium für das Vorliegen oder NichtVorliegen einer bestimmten Untergrundeigenschaft bzw. Beschaffenheit erhalten, als wenn die Messwerte unabhängig voneinander betrachtet werden würden. Die Sensorkombination (Infrarotmesser plus Lichtsensor) ist besonders zur Unterscheidung einer Rasenfläche von anderen Untergründen oder zur Unterscheidung von bestimmten Eigenschaften einer Rasenfläche (gemäht, nicht gemäht) geeignet. Die Verknüpfung der Intensitäten ermöglicht es zudem, ein Entscheidungskriterium ohne Kenntnis über die Entfernung zur Messfläche zu ermitteln.

Eine Möglichkeit zur Berücksichtigung beider Messwerte bei der Beurteilung der Untergrundbeschaffenheit besteht darin, entsprechende Toleranzfelder für die gemessenen Intensitäten in einer Tabelle in einem Speicher der Steuermittel abzulegen. Vorzugsweise werden die gemessenen Intensitäten jedoch mittels einer mathematischen Funktion zu einem Ergebnis verknüpft und es wird von den Steuermitteln überprüft, ob sich dieses eine Ergebnis in einem bestimmten Toleranzfeld bewegt. Bevorzugt ist die mathematische Funktion so ausgebildet, dass das Ergebnis (Entscheidungskriterium) unabhängig von der Entfernung der Messflecken der Sensoren zu den Sensoren ist und/oder unabhängig ist von den absoluten Messwerten (Intensitäten). Bei den Messflecken (Messflächen) handelt es sich um die Flächen auf dem Untergrund, aus denen reflektierte Strahlung auf die Sensoren auftrifft.

Mit Vorteil ist vorgesehen, dass die Steuermittel einen Verhältniswert der gemessenen Intensitäten ermittelt und diesen Verhältniswert (Ergebnis) mit in einer Tabelle abgelegten Verhältniswerten vergleichen.

Wie zu Anfang erwähnt, ist es denkbar, das als Sender zum Bestrahlen des Untergrundes die Sonne ausgenutzt wird - das Roboter-Fahrzeug also in Bezug auf die von den Sensoren detektierte elektromagnetische Strahlung senderfrei ausgebildet ist. Um Störeinflüsse auf die von den Sensoren durchgeführte Messungen zu minimieren, ist bevorzugt jedoch mindestens ein Sender zum Ausstrahlen einer Infrarotstrahlung und/oder mindestens einem Sender zum Ausstrahlen von sichtbarem Licht vorgesehen. Es liegt im Rahmen der Erfindung einen gemeinsamen Sender für Infrarotstrahlung und sichtbares Licht vorzusehen.

Um vom Umgebungslicht zumindest näherungsweise unabhängige Messergebnisse erzielen zu können, ist es von Vorteil, wenn als Sender gepulste bzw. amplitudenmodulierte Dioden eingesetzt werden und die Steuermittel entsprechend zur Verarbeitung der gepulsten und/oder amplitudenmodulierten elektromagnetischen Strahlung ausgebildet sind.

Besonders gute Ergebnisse, insbesondere zum Erkennen von Grasflächen, wurden erzielt, wenn der Infrarotsensor die Intensität von naher Infrarotstrahlung aus einem Bereich zwischen etwa 700 mm und etwa 2.500 nm misst. Falls ein Sender für Infrarotstrahlung vorgesehen ist, sendet dieser bevorzugt Infrarotstrahlung aus diesem Wellenlängenbereich aus.

Weiterhin hat es sich als vorteilhaft erwiesen, wenn von dem Lichtsensor die Intensität im grünen (etwa 500 nm bis etwa 575 nm) und/oder im roten (etwa 650 nm bis etwa 750 nm) Wellenlängenbereich gemessen wird. In einer bevorzugten Ausführungsform ist der Lichtsensor als eine Kombination von zumindest zwei Fotodioden zum Erfassen der Intensitäten aus zwei unterschiedlichen Licht-Wellenlängenbereichen ausgebildet. Falls ein Sender für sichtbares Licht vorgesehen ist, strahlt dieser vorzugsweise Licht, aus zumindest einem dieser Wellenlängenbereiche, aus.

Zur Erhöhung der Detektionsauflösung ist in Ausgestaltung der Erfindung vorgesehen, das an dem Roboter-Fahrzeug mehrere Sensoreinheiten, jeweils umfassend mindestens einen Infrarotsensor und mindestens einen Lichtsensor angeordnet sind. Wird lediglich eine einzige derartige Sensoreinheit vorgesehen, so kann nicht ausgeschlossen werden, das sich das Roboter-Fahrzeug teilweise bereits auf einem Untergrund befindet, der von dem Roboter-Fahrzeug nicht befahren werden soll.

Zweckmäßig ist es, die wie zuvor beschrieben ausgebildeten Sensoreinheiten verteilt entlang einer Querachse des Fahrzeugs, also quer zur Geradeausfahrrichtung des Fahrzeuges anzuordnen, um den im Bereich des Fahrzeugs befindlichen Untergrund möglichst umfassend, d.h. großflächig analysieren zu können. Bevorzugt ist eine Ausführungsform, bei der mindestens zwei in Fahrtrichtung hintereinander angeordnete Reihen von Sensoreinheiten vorgesehen sind, um dem Verlauf einer Grenzlinie optimal folgen zu können.

Von besonderem Vorteil ist eine Ausführungsform, bei der die Sensoreinheiten nicht beliebig entlang der Querachse angeordnet sind, sondern bei der die Sensoreinheiten unmittelbar, vorzugsweise gleichmäßig verteilt auf der Querachse angeordnet sind.

Es liegt im Rahmen der Erfindung zumindest einer der Sensoreinheiten, vorzugsweise einer Gruppe von Sensoreinheiten oder jeder einzelnen Sensoreinheit mindestens einen Sender zum Aussenden von Infrarotstrahlung und/oder von sichtbarem Licht zuzuordnen. Alternativ können die Sensoreinheiten auch passiv, d.h. senderfrei arbeitend ausgebildet sein.

Von besonderem Vorteil ist eine Ausführungsform, bei der die Steuermittel anhand der auf Basis der von dem Sensoreinheiten gemessenen Intensitäten ermittelten Entscheidungskriterien eine Grenze, insbesondere eine Grenzlinie, zwischen zwei unterschiedlich beschaffenen Untergrundabschnitten erkennend ausgebildet sind.

Mittels derart ausgebildeter Steuermittel ist es beispielsweise möglich, die Schnittkante einer Rasenfläche, d.h. die Grenze zwischen einem bereits gemähten und einem noch nicht gemähten Rasenabschnitt, zu erkennen und auf Basis dieser Informationen die Antriebsmittel des Fahrzeugs anzusteuern. Insbesondere eignen sich derartig ausgebildete Steuermittel für den Einsatz in nach dem Mulchprinzip arbeitenden Rasenmähern, bei denen das gemähte Gras auf der Rasenfläche verbleibt. Hierdurch ergibt sich eine unterschiedliche Reflektivität des bereits gemähten und des noch nicht gemähten Grases, wobei die gemessenen Intensitäten im gemähten Gras in der Regel höher sind als die im nicht gemähten Gras, da von den gemähten, quer zu den Sensoren liegenden Grashalmen eine größere Reflektionsfläche bereit gestellt wird, als von im wesentlichen vertikal stehenden Grashalmen. Sind beispielsweise insgesamt fünf Sensoreinheiten entlang der Querachse vorgesehen und werden von den ersten drei Sensoreinheiten niedrige Intensitäten und von der vierten und fünften Sensoreinheit hohe Intensitäten gemessen, so erkennen die Steuermittel darauf, das die Schnittkante sich zwischen dem der dritten und der vierten Sensoreinheit befindet. Aufgrund der so gewonnenen Information über die Lage einer Grenze zwischen zwei unterschiedlich beschaffenen Untergrundabschnitten relativ zu dem Roboter-Fahrzeug können spezielle Abfahrstrategien bzw. Mähstrategien durchgeführt werden.

Beispielsweise ist es möglich, die Steuermittel derart auszubilden, dass diese das Antriebsmittel derart ansteuern, dass sich das Roboter-Fahrzeug entlang der ermittelten Grenze bewegt. Dies ist insbesondere bei Rasenmähern interessant, um ein Abfahren der Rasenfläche in parallelen Bahnen zu realisieren. Dabei ist es denkbar, das die Rasenfläche in geraden Bahnen, spiralförmig oder mäanderförmig abgefahren wird.
Bevorzugt sind die Steuermittel derart ausgebildet, dass sich die Grenze zwischen den unterschiedlich beschaffenen Untergrundabschnitten, vorzugsweise dauerhaft in einer definierten Relativposition zu dem Roboter-Fahrzeug befindet. Insbesondere bei einem als Rasenmäher ausgebildeten Roboter-Fahrzeug kann somit eine gleichbleibende Überdeckung des bereits geschnittenen Abschnittes realisiert werden, wodurch ein streifenförmiges Stehenbleiben von Grashalmen zwischen zwei benachbarten Fahrbahnen mit Vorteil vermieden wird. Ferner ist es von Vorteil, wenn die Steuermittel derart ausgebildet sind, dass das Roboter-Fahrzeug eine bestimmte Arbeitsfläche (z.B. eine Rasenfläche) nicht verlässt.

Von besonderem Vorteil ist eine Ausführungsform, bei der das autonome Roboter-Fahrzeug als Rasenmäher mit einem Mähwerk ausgebildet ist. Die Antriebsmittel des Rasenmähers können dabei beispielsweise einen Antriebsmotor umfassen, der auf einer Welle angeordnete Räder drehend antreibt, wobei die Antriebsmittel auch mindestens ein drehbares, bei Bedarf auch lenkbares Rad umfassen.

Alternativ ist es denkbar, den Rasenmäher als Luftkissenfahrzeug auszubilden, wobei die Lenkung eines derartigen Fahrzeugs bevorzugt durch Umlenken eines Luftstroms erfolgt.

Mit Vorteil ist der Rasenmäher mit Mitteln zum An- und Abschalten des Mähwerks ausgestattet, wobei die Mittel bevorzugt derart ausgebildet sind, dass das Mähwerk immer dann ausgeschaltet wird, wenn der Rasenmäher eine Grasfläche verlässt und/oder wenn der Rasenmäher in einen bereits gemähten Bereich hinein verfährt. Die Mittel können Teil des Steuermittel sein. Das zeitweise Abschalten des Mähwerks führt zu einer erhöhten Einsatzzeit eines Rasenmähers, wenn es sich um einen akkubetriebenen autonomen Rasenmäher handelt. Ebenso kann die Abschaltfunktion als Sicherheitsfunktion realisiert werden, beispielsweise in dem das Mähwerk abgeschaltet wird, wenn die Steuermittel auf das Vorhandensein eines Gegenstandes oder eines Lebewesens im Bereich der Messfläche der Sensoren schließen.

Weiterhin betrifft die Erfindung ein Verfahren zum Ansteuern von Antriebsmitteln zum Bewegen eines für einen selbstständigen Betrieb ausgebildeten Fahrzeugs, insbesondere zum Ansteuern eines Rasenmähers. Kern des Verfahrens ist, dass die Antriebsmittel nicht nur in Abhängigkeit von einer von dem Untergrund reflektierten Infrarotstrahlung, sondern auch in Abhängigkeit von der Intensität einer von dem Untergrund reflektierten Lichtstrahlung angesteuert werden. Bezüglich weiterer vorteilhafter Ausgestaltungen des erfindungsgemäßen Verfahrens wird auf die vorhergehende Beschreibung des Fahrzeugs verwiesen, in der vorteilhafte mögliche Verfahrensschritte, teilweise vorrichtungsgemäß offenbart sind.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: eine schematische Darstellung eines als Rasenmäher ausgebildeten Fahrzeugs in einer Ansicht von unten,
- Fig. 2:: eine schematische Darstellung der Anordnung eines Senders sowie zweier Sensoren,
- Fig. 3:: eine schematische Darstellung einer möglichen Fahrtstrecke eines Fahrzeugs ausgehend von einem ersten Untergrund in Richtung auf einen zweiten Untergrund,
- Fig. 4:: eine Darstellung der auf der Fahrtstrecke gemäß Fig. 3 gemessenen Intensitäten in einem Diagramm,
- Fig. 5:: eine Darstellung eines als Rasenmäher ausgebildeten Fahrzeugs auf einer Fahrt entlang einer Schnittkante einer Rasenfläche,
- Fig. 6:: eine mögliche Anordnung von Sensoreinheiten bei dem in Fig. 5 dargestelltem Roboter-Fahrzeug,
- Fig. 7:: eine Darstellung der während der Fahrt des Fahrzeugs in der Darstellung gemäß Fig. 5 gemessenen Intensitäten der Sensoreinheiten in einem Diagramm,
- Fig. 8:: eine graphische Darstellung einer möglichen Fahrstrategie (Mähstrategie) für einen Rasenmäher zum Mähen einer Rasenfläche und
- Fig. 9:: die Darstellung eines als Rasenmäher ausgebildeten Fahrzeugs während der Fahrt entlang einer Schnittkante, wobei sich benachbart befahrene Bahnen überlappen.

In den Figuren sind gleiche Bauteile und Bauteile mit der gleichen Funktion mit den gleichen Bezugszeichen gekennzeichnet.

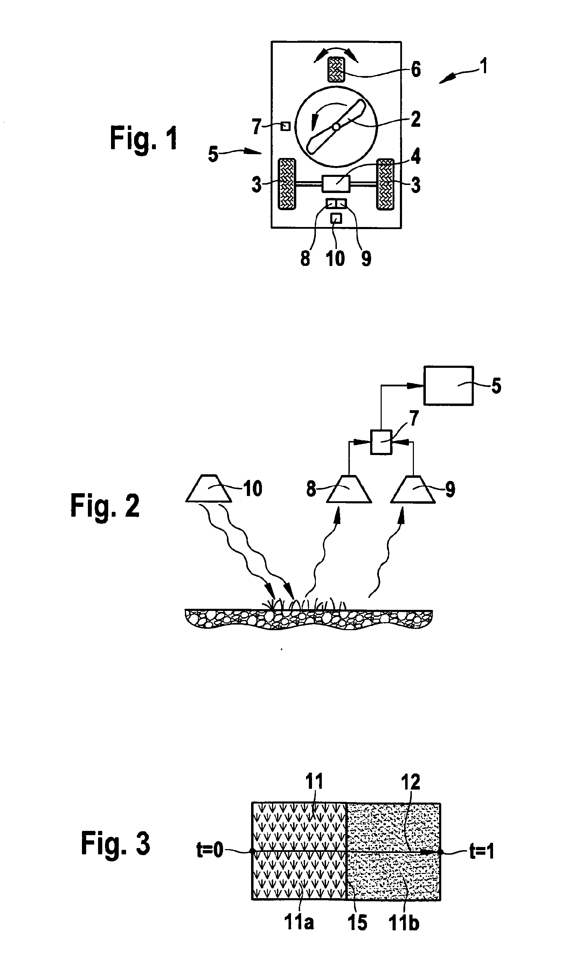

In Fig. 1 ist ein als Rasenmäher ausgebildetes Roboter-Fahrzeug 1 in einer Ansicht von unten gezeigt. Das Roboter-Fahrzeug 1 umfasst ein rotierbares Mähwerk 2, sowie zwei Antriebsräder 3, die mittels eines schematisch angedeuteten Antriebsmotors 4 antreibbar sind. Die Antriebsräder 3 sowie der Antriebsmotor 4 sind Teil von Antriebsmitteln 5 des Fahrzeugs 1, zu dem auch ein drehbares, insbesondere lenkbares Rad 6 zu zählen ist. Falls das Rad 6 nicht aktiv lenkbar ist, kann eine Richtungsänderung durch eine Realisierung unterschiedlicher Drehzahlen der Antriebsräder 3 verwirklicht werden.

Ferner umfasst das Roboter-Fahrzeug 1 mindestens einen Mikroprozessor umfassende Steuermittel 7, mit denen sowohl der Antriebsmotor 4 als auch das lenkbare Rad 6 der Antriebsmittel 5 ansteuerbar sind. Die Steuermittel 7 dienen gleichzeitig als Mittel zum An- und Abschalten des Mähwerks 2 in Abhängigkeit der von den Sensoren 8, 9 gemessenen Intensitäten. Die Ansteuerung der Antriebsmittel 5 erfolgt auf Basis von mit einem Infrarotsensor 8 und einem Lichtsensor 9 gemessenen Intensitäten von an einem Untergrund reflektierter Infrarotstrahlung sowie von an dem Untergrund reflektierten Lichtstrahlen. Zum Anstrahlen des Untergrundes mit Infrarotstrahlung und mit Licht aus dem sichtbaren Spektrum ist ein gemeinsamer Sender 10 vorgesehen.

In Fig. 2 ist eine schematische Anordnung des Infrarotsensors 8 und des Lichtsensors 9 sowie des Senders 10 gezeigt. Bei dem Sensor 10 handelt es sich in diesem Ausführungsbeispiel um eine gepulste Diode. Die Sensoren 8, 9 sind als Fototransistoren ausgebildet, wobei der Infrarotsensor 8 die Intensität von Infrarotstrahlung im nahen Infrarotbereich (700 nm bis 2500 nm) misst und der Lichtsensor 9 die Intensität von sichtbarem Licht misst, in diesem Ausführungsbeispiel im roten Lichtspektrum. Die von den Sensoren 8,9 gemessenen Intensitäten werden als Messsignale dem Steuermittel 7 mit Mikroprozessor zugeleitet. Dort werden die Signale, in diesem Ausführungsbeispiel durch Verhältnisbildung miteinander verknüpft, wobei der Mikroprozessor (Auswerteschaltung) der Steuermittel 7 prüft, ob der ermittelte Verhältniswert der gemessenen Intensitäten im zu erwarteten Bereich für Gras liegt. Somit dient also das Ergebnis der Verhältnisbildung als Entscheidungskriterium für eine bestimmte Ansteuerung der Antriebsmittel 5.

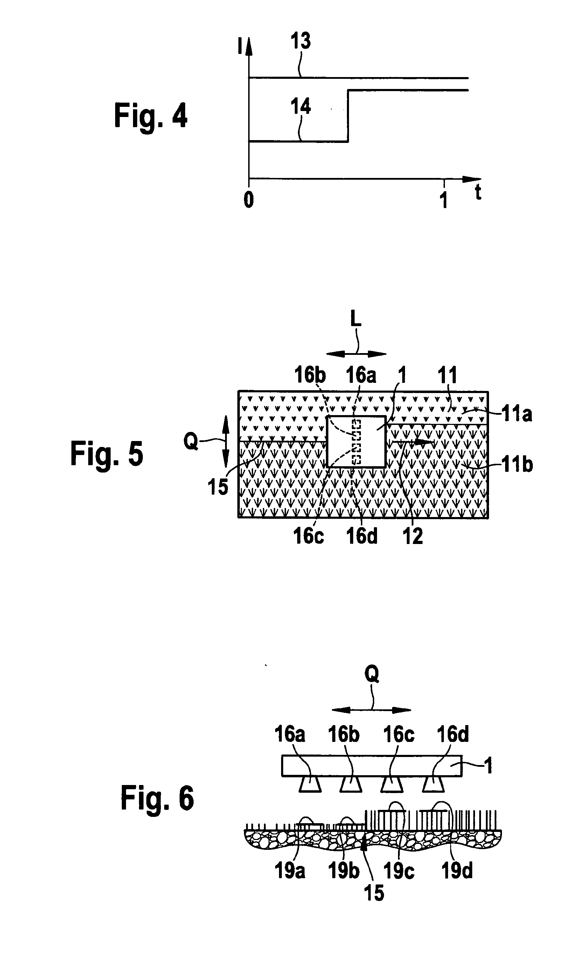

In Fig. 3 ist ein Untergrund 11, bestehend aus einem ersten Untergrundabschnitt 11a und einem zweiten Untergrundabschnitt 11b gezeigt, wobei die beiden Untergrundabschnitte 11a, 11b unterschiedlich beschaffen sind - beispielsweise handelt es sich bei dem Untergrundabschnitt 11a um eine Rasenfläche und bei dem Untergrundabschnitt 11b um eine Sandfläche. Fährt nun das Roboter-Fahrzeug 1 entlang des Pfeils 12 von dem ersten Untergrundabschnitt 11a in den zweiten Untergrundabschnitt 11b hinein, so werden von den Sensoren 8, 9 die in Fig. 4 gezeigten Intensitäten 13, 14 gemessen, wobei es sich bei der mit dem Bezugszeichen 13 gekennzeichneten Intensität um die Intensität von an dem Untergrund 11 reflektierter Infrarotstrahlung und es sich bei der mit dem Bezugszeichen 14 gekennzeichneten Intensität um die Intensität von an dem Untergrund 11 reflektierten sichtbaren Licht handelt. Zu erkennen ist, dass sich bei Überschreiten einer Grenze 15 zwischen den Untergrundabschnitten 11a, 11b das Verhältnis der Intensitäten 13, 14 zueinander ändert, was als Entscheidungskriterium für das Verlassen des ersten Untergrundabschnittes 11a herangezogen wird. Lediglich beispielhaft ist gezeigt, dass die Intensität 13 der Infrarotstrahlung näherungsweise konstant bleibt, wohingegen die Intensität 14 der Lichtstrahlung sprunghaft ansteigt.

Beispielsweise kann unmittelbar nach Überschreiten der Grenze 15 durch eine entsprechende Ansteuerung der Antriebsmittel 5 eine Wende des Fahrzeugs 1 eingeleitet werden.

In Fig. 5 ist ein ebenfalls als Rasenmäher ausgebildetes Roboter-Fahrzeug 1 auf einem Untergrund 11 (Rasenfläche) gezeigt, wobei das Roboter-Fahrzeug 1 in Pfeilrichtung 12 entlang der Schnittkante bzw. der Grenze 15 zwischen den Untergrundabschnitten 11a und 11b fährt. Bei dem ersten Untergrundabschnitt 11a handelt es sich dabei um bereits gemähtes und bei dem zweiten Untergrundabschnitt 11b um noch nicht gemähtes Gras. Um festzustellen, wo sich die Grenze 15 relativ zu dem Roboter-Fahrzeug 1 befindet, um somit Nachfahren des Fahrzeugs 1 entlang der Grenze 15 zu ermöglichen, sind entlang einer Querachse Q des Fahrzeugs 1, die senkrecht zu einer sich in Längsrichtung des Fahrzeugs erstreckenden Fahrzeugachse erstreckt in diesem Ausführungsbeispiel vier Sensoreinheiten 16a, 16b, 16c, 16d gleichmäßig verteilt angeordnet, wobei jede Sensoreinheit 16a, 16b, 16c, 16d jeweils aus einem Infrarotsensor 8 und einem Lichtsensor 9 besteht.

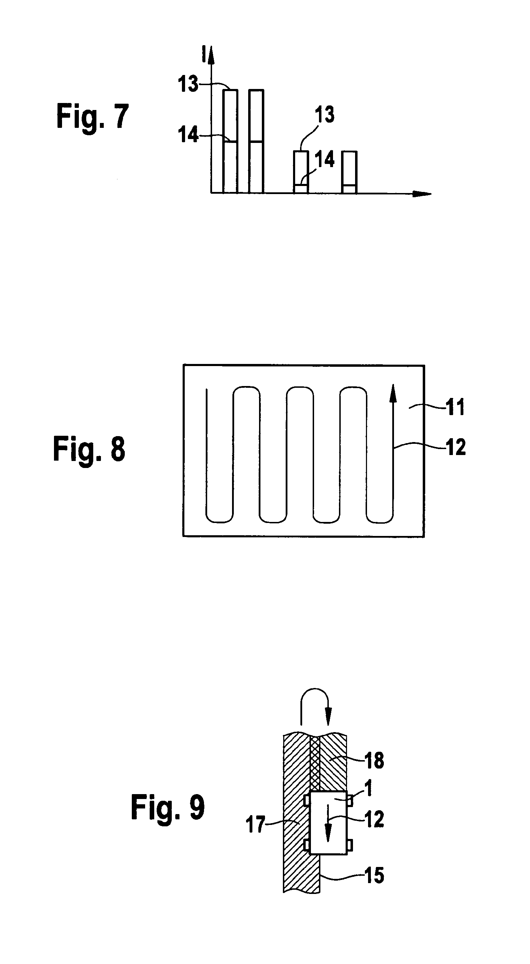

In Fig. 6 ist die Anordnung dieser Sensoreinheiten 16a, 16b, 16c, 16d entlang der Querachse Q gezeigt. Die von diesen Sensoreinheiten 16a, 16b, 16c, 16d in zugehörigen Messflecken 19a, 19b, 19c, 19d gemessenen Intensitäten von Infrarotstrahlung und von sichtbarem Licht sind in dem Diagramm gemäß Fig. 7 gezeigt. Durch einen Vergleich der Intensitäten bzw. der Intensitätsverhältnisse kann mittels der Steuermittel 7 festgestellt werden, dass sich die Grenze 15 (Schnittkante) zwischen der zweiten Sensoreinheit 16b und der dritten Sensoreinheit 16c befindet. Die Steuermittel sind derart ausgebildet, dass das Roboter-Fahrzeug 1 entlang der Längserstreckung der Grenze 15 verfährt, also die Schnittkante zwischen den Sensoreinheiten 16b und 16c verbleibt. Wandert die Schnittkante aus dem Bereich zwischen diesen Sensoreinheiten ab, so wird die Fahrtrichtung mittels der Steuermittel entsprechend korrigiert, so dass der aus Rasen bestehende Untergrund zeiteffektiv befahren und somit gemäht wird. Die räumliche Detektions-Auflösung ist dabei durch die Anzahl der Sensoreinheiten und die räumliche Anordnung bzw. die flächige Anordnung der Sensoreinheiten bestimmt. Die beschriebene Schnittkantenmessung kann zum Abfahren paralleler Bahnen verwendet werden und ermöglicht so die Realisierung einer Mähstrategie zur effizienten vollständigen Abdeckung der Arbeitsfläche.

Fig. 8 zeigt ein Beispiel für eine solche Strategie. Der Untergrund 11 wird dabei durch mäanderförmiges Abfahren entlang der durch den Pfeil 12 gekennzeichneten Bahn vollständig abgedeckt. Gut sind dabei die zueinander parallelen Bahnabschnitte erkennbar.

In Fig. 9 ist im Detail gezeigt, wie zueinander parallele Bahnen 17, 18 abgefahren werden können. Dabei überlappt die Bahn 18, die gerade gemäht wird, die bereits gemähte Bahn 17 teilweise, wodurch ein Stehenbleiben von Grashalmen zwischen den Bahnen 17, 18 vermieden wird. Bevorzugt umfasst das als Rasenmäher ausgebildete Roboter-Fahrzeug 1 hierzu eine in Fig. 6 schematisch gezeigte Messeinrichtung mit einer Vielzahl von Sensoreinheiten 16a, 16b, 16c, 16d zum Erkennen der Grenze 15 (Schnittkante), so dass durch eine entsprechende Ansteuerung der Antriebsmittel eine konstante Überdeckung der Bahnen 17, 18 gewährleistet wird. Durch die Fähigkeit zum Abfahren zueinander paralleler Bahnen lassen sich neben der in Fig. 8 gezeigten mäanderförmigen Mähstrategie auch weitere Mähstrategien, beispielsweise das Abfahren des Untergrundes 11 in Spiralen realisieren.

## Patentansprüche

1. Roboter-Fahrzeug, insbesondere ein für einen selbstständigen Betrieb ausgebildetes Roboter-Fahrzeug, mit Antriebsmitteln (5) zum Bewegen des Fahrzeugs (1) auf einem Untergrund (11), mit einem Infrarotsensor (8) zum Detektieren der Intensität einer von dem Untergrund (11) reflektierten Infrarotstrahlung und mit Steuermitteln (7) zum Ansteuern der Antriebsmittel (5) in Abhängigkeit der gemessenen Intensität der Infrarotstrahlung,
**dadurch gekennzeichnet,**
**dass** ein Lichtsensor (9) zum Detektieren der Intensität einer von dem Untergrund (11) reflektierten Lichtstrahlung aus dem sichtbaren Spektrum vorgesehen ist, und dass die Steuermittel (7) zum Ansteuern der Antriebsmittel (5) in Abhängigkeit der gemessenen Intensität der Lichtstrahlung ausgebildet sind.

2. Roboter-Fahrzeug nach Anspruch 1,
**dadurch gekennzeichnet,**
**dass** die Steuermittel (7) die Intensität der Infrarotstrahlung und die Intensität der Lichtstrahlung als gemeinsames Entscheidungskriterium für das Vorliegen oder Nichtvorliegen einer bestimmten Untergrundbeschaffenheit berücksichtigend ausgebildet sind.

3. Roboter-Fahrzeug nach Anspruch 2,
**dadurch gekennzeichnet,**
**dass** die Steuermittel (7) derart ausgebildet sind, dass das gemeinsame Entscheidungskriterium durch Verknüpfen der Intensitäten mit einer mathematischen Funktion erhalten wird, insbesondere mit einer mathematischen Funktion deren Ergebnis unabhängig von der Entfernung der Sensoren (8, 9) zu ihren Messflecken (19a, 19b, 19c, 19d) auf dem Untergrund (11) und/oder unabhängig von den absoluten Intensitäten ist.

4. Roboter-Fahrzeug nach Anspruch 3,
**dadurch gekennzeichnet,**
**dass** die Steuermittel (7) derart ausgebildet sind, dass das Entscheidungskriterium durch das Bilden des Verhältnisses der Intensitäten erhalten wird.

5. Roboter-Fahrzeug nach einem der vorhergehenden Ansprüche,
**dadurch gekennzeichnet,**
**dass** der Infrarotsensor (8) und/oder der Lichtsensor (9) passiv arbeitend ausgebildet sind.

6. Roboter-Fahrzeug nach einem der Ansprüche 1 bis 4,
**dadurch gekennzeichnet,**
**dass** mindestens ein Sender (10) zum Aussenden der Infrarotstrahlung und/oder der sichtbaren Lichtstrahlung vorgesehen ist.

7. Roboter-Fahrzeug nach Anspruch 6,
**dadurch gekennzeichnet,**
**dass** der Sender (10) als gepulste und/oder amplitudenmodulierte Diode ausgebildet ist.

8. Roboter-Fahrzeug nach einem der vorhergehenden Ansprüche,
**dadurch gekennzeichnet,**
**dass** der Infrarotsensor (8) die Intensität von Infrarotstrahlung aus dem nahen Infrarotspektrum messend ausgebildet ist.

9. Roboter-Fahrzeug nach einem der vorhergehenden Ansprüche,
**dadurch gekennzeichnet,**
**dass** der Lichtsensor (9) die Intensität von Licht aus dem grünen und/oder roten Spektrum messend ausgebildet ist.

10. Roboter-Fahrzeug nach einem der vorhergehenden Ansprüche,
**dadurch gekennzeichnet,**
**dass** der Infrarotsensor (8) und der Lichtsensor (9) eine Sensoreinheit bilden, und dass mehrere Sensoreinheiten (16a, 16b, 16c, 16d) vorgesehen sind.

11. Roboter-Fahrzeug nach Anspruch 10,
**dadurch gekennzeichnet,**
**dass** die Sensoreinheiten (16a, 16b, 16c, 16d) verteilt entlang einer Querachse (Q) des Fahrzeugs (1) angeordnet sind, die quer zu einer sich in Fahrtrichtung erstreckenden Fahrzeugachse ausgerichtet ist.

12. Roboter-Fahrzeug nach Anspruch 11,
**dadurch gekennzeichnet,**
**dass** die Sensoreinheiten (16a, 16b, 16c, 16d) nebeneinander, vorzugsweise gleichmäßig beabstandet, unmittelbar auf der Querachse (Q) des Fahrzeugs (1) angeordnet sind.

13. Roboter-Fahrzeug nach einem der Ansprüche 10 bis 12,
**dadurch gekennzeichnet,**
**dass** mindestens einer der Sensoreinheiten (16a, 16b, 16c, 16d), vorzugsweise einer Gruppe von Sensoreinheiten (16a, 16b, 16c, 16d), insbesondere jeder der Sensoreinheiten (16a, 16b, 16c, 16d) mindestens ein Sender (10) zum Aussenden von Infrarotstrahlung und/oder Licht aus dem sichtbaren Spektrum zugeordnet ist.

14. Roboter-Fahrzeug nach einem der Ansprüche 10 bis 12,
**dadurch gekennzeichnet,**
**dass** die Steuermittel (7) anhand von Entscheidungskriterien, die aus der jeweiligen Verknüpfung der von den Sensoren der Sensoreinheiten (16a, 16b, 16c, 16d) gemessen Intensitäten (13, 14) resultieren, eine Grenze (15), insbesondere eine Grenzlinie, zwischen zwei unterschiedlich beschaffenen Untergrundabschnitten (11a, 11b) erkennend ausgebildet sind.

15. Roboter-Fahrzeug nach Anspruch 14,
**dadurch gekennzeichnet,**
**dass** die Steuermittel (7) die Antriebsmittel (5) derart ansteuernd ausgebildet sind dass das Roboter-Fahrzeug (1) entlang der Grenze (15) verfährt und/oder eine Arbeitsfläche nicht verlässt.

16. Roboter-Fahrzeug nach einem der Ansprüche 14 oder 15,
**dadurch gekennzeichnet,**
**dass** die Steuermittel (7) die Antriebsmittel (5) derart ansteuernd ausgebildet sind, dass das Roboter-Fahrzeug (1) gleichzeitig beide Untergrundabschnitte (11a, 11b) überfährt.

17. Roboter-Fahrzeug nach einem der vorhergehenden Ansprüche,
**dadurch gekennzeichnet,**
**dass** das Roboter-Fahrzeug (1) ein Rasenmäher mit einem Mähwerk ist.

18. Roboter-Fahrzeug nach Anspruch 17,
**dadurch gekennzeichnet,**
**dass** der Rasenmäher Mittel zum An- und Abschalten des Mähwerks (2) in Abhängigkeit der gemessenen Intensitäten (13, 14) aufweist, insbesondere in Abhängigkeit des Erkennens eines Gegenstandes und/oder eines Lebewesens durch die Steuermittel (7).

19. Verfahren zum Ansteuern von Antriebsmitteln (5) zum Bewegen eines Roboter-Fahrzeuges, insbesondere eines für einen selbstständigen Betrieb ausgebildetes Roboter-Fahrzeug, auf einem Untergrund (11), wobei die Antriebsmittel (5) in Abhängigkeit der gemessenen Intensität einer von dem Untergrund (11) reflektierten Infrarotstrahlung angesteuert werden,
**dadurch gekennzeichnet,**
**dass** die Antriebsmittel (5) in Abhängigkeit der gemessenen Intensität einer von dem Untergrund (11) reflektierten Lichtstrahlung aus dem sichtbaren Spektrum angesteuert werden.

## Claims

1. Robotic vehicle, in particular a robotic vehicle designed for autonomous operation, having drive means (5) for moving the vehicle (1) on an underlying surface (11), having an infrared sensor (8) for detecting the intensity of infrared radiation reflected by the underlying surface (11), and having control means (7) for activating the drive means (5) as a function of the measured intensity of the infrared radiation, **characterized in that** a light sensor (9) is provided for detecting the intensity of optical radiation, from the visible spectrum, reflected by the underlying surface (11), and **in that** the control means (7) is designed to activate the drive means (5) as a function of the measured intensity of the optical radiation.

2. Robotic vehicle according to Claim 1, **characterized in that** the control means (7) are designed in a fashion taking account of the intensity of the infrared radiation and intensity of the optical radiation as a common decision criterion for the presence or absence of a specific nature of the underlying surface.

3. Robotic vehicle according to Claim 2, **characterized in that** the control means (7) are designed in such a way that the common decision criterion is obtained by combining the intensities with the aid of a mathematical function, in particular with the aid of a mathematical function whose result is independent of the distance of the sensors (8, 9) from their measuring spots (19a, 19b, 19c, 19d) on the underlying surface (11), and/or independent of the absolute intensities.

4. Robotic vehicle according to Claim 3, **characterized in that** the control means (7) are designed in such a way that the decision criterion is obtained by forming the ratios of the intensities.

5. Robotic vehicle according to one of the preceding claims, **characterized in that** the infrared sensor (8) and/or the light sensor (9) are designed to operate passively.

6. Robotic vehicle according to one of Claims 1 to 4, **characterized in that** at least one transmitter (10) is provided for emitting the infrared radiation and/or the visible optical radiation.

7. Robotic vehicle according to Claim 6, **characterized in that** the transmitter (10) is designed as a pulsed and/or amplitude-modulated diode.

8. Robotic vehicle according to one of the preceding claims, **characterized in that** the infrared sensor (8) is designed in a fashion measuring the intensity of infrared radiation from the near infrared spectrum.

9. Robotic vehicle according to one of the preceding claims, **characterized in that** the light sensor (9) is designed in a fashion measuring the intensity of light from the green and/or red spectrum(s).

10. Robotic vehicle according to one of the preceding claims, **characterized in that** the infrared sensor (8) and the light sensor (9) form a sensor unit, and **in that** a plurality of sensor units (16a, 16b, 16c, 16d) are provided.

11. Robotic vehicle according to Claim 10, **characterized in that** the sensor units (16a, 16b, 16c, 16d) are arranged in a fashion distributed along a transverse axis (Q) of the vehicle (1) which is aligned transverse to a vehicle axis extending in the travel direction.

12. Robotic vehicle according to Claim 11, **characterized in that** the sensor units (16a, 16b, 16c, 16d) are arranged in a fashion next to one another, preferably uniformly spaced apart, and directly on the transverse axis (Q) of the vehicle (1).

13. Robotic vehicle according to one of Claims 10 to 12, **characterized in that** at least one of the sensor units (16a, 16b, 16c, 16d), preferably a group of sensor units (16a, 16b, 16c, 16d), in particular each of the sensor units (16a, 16b, 16c, 16d) is assigned at least one transmitter (10) for emitting infrared radiation and/or light from the visible spectrum.

14. Robotic vehicle according to one of Claims 10 to 12, **characterized in that** the control means (7) are designed in a fashion which detects a boundary (15), in particular a boundary line, between two underlying surface sections (11a, 11b) of different nature, with the aid of decision criteria which result from the respective combination of the intensities (13, 14) measured by the sensors of the sensor units (16a, 16b, 16c, 16d).

15. Robotic vehicle according to Claim 14, **characterized in that** the control means (7) are designed in a fashion activating the drive means (5) in such a way that the robotic vehicle (1) travels along the boundary (15) and/or does not leave a working surface.

16. Robotic vehicle according to either of Claims 14 and 15, **characterized in that** the control means (7) are designed in a fashion activating the drive means (5) in such a way that the robotic vehicle (1) simultaneously travels over both underlying surface sections (11a, 11b).

17. Robotic vehicle according to one of the preceding claims, **characterized in that** the robotic vehicle (1) is a lawnmower with a mowing unit.

18. Robotic vehicle according to Claim 17, **characterized in that** the lawnmower has means for turning the mowing unit (2) on and off as a function of the measured intensities (13, 14), in particular as a function of the detection of an object and/or a living being by the control means (7).

19. Method for activating drive means (5) for moving a robotic vehicle, in particular a robotic vehicle designed for autonomous operation, on an underlying surface (11), the drive means (5) being activated as a function of the measured intensity of infrared radiation reflected by the underlying surface (11), **characterized in that** the drive means (5) are activated as a function of the measured intensity of optical radiation from the visible spectrum reflected by the underlying surface (11).

## Revendications

1. Véhicule robot, en particulier véhicule robot configuré pour fonctionner de manière autonome, doté de moyens d'entraînement (5) qui déplacent le véhicule (1) sur un sol (11), d'un détecteur d'infrarouge (8) qui détecte l'intensité d'un rayonnement infrarouge réfléchi par le sol (11) et de moyens de commande (7) qui commandent les moyens d'entraînement (5) en fonction de l'intensité mesurée du rayonnement infrarouge,
**caractérisé**
**en ce qu'**un détecteur de lumière (9) qui détecte l'intensité d'un rayonnement lumineux de la partie visible du spectre réfléchi par le sol (11) est prévu et
**en ce que** les moyens de commande (7) sont configurés pour commander les moyens d'entraînement (5) en fonction de l'intensité mesurée du rayonnement lumineux.

2. Véhicule robot selon la revendication 1, **caractérisé en ce que** les moyens de commande (7) sont configurés pour tenir compte de l'intensité du rayonnement infrarouge et de l'intensité du rayonnement lumineux comme critère commun de décision de la présence ou de l'absence d'une qualité définie du sol.

3. Véhicule robot selon la revendication 2, **caractérisé en ce que** les moyens de commande (7) sont configurés de telle sorte que le critère commun de décision est obtenu en conjuguant les intensités à l'aide d'une fonction mathématique, en particulier à l'aide d'une fonction mathématique dont le résultat est indépendant de la distance entre les détecteurs (8, 9) et leur tache de mesure (19a, 19b, 19c, 19d) sur le sol (11) et/ou indépendant des intensités absolues.

4. Véhicule robot selon la revendication 3, **caractérisé en ce que** les moyens de commande (7) sont configurés de telle sorte que le critère de décision est obtenu en formant le rapport entre les intensités.

5. Véhicule robot selon l'une des revendications précédentes, **caractérisé en ce que** le détecteur infrarouge (8) et/ou le détecteur de lumière (9) sont configurés de manière à fonctionner passivement.

6. Véhicule robot selon l'une des revendications 1 à 4, **caractérisé en ce qu'**au moins un émetteur (10) qui émet un rayonnement infrarouge et/ou un rayonnement lumineux visible est prévu.

7. Véhicule robot selon la revendication 6, **caractérisé en ce que** l'émetteur (10) est configuré comme diode pulsée et/ou modulée en amplitude.

8. Véhicule robot selon l'une des revendications précédentes, **caractérisé en ce que** le détecteur infrarouge (8) est configuré pour mesurer l'intensité du rayonnement infrarouge dans la partie proche du spectre infrarouge.

9. Véhicule robot selon l'une des revendications précédentes, **caractérisé en ce que** le détecteur de lumière (9) est configuré pour mesurer l'intensité de la lumière dans la partie verte et/ou la partie rouge du spectre.

10. Véhicule robot selon l'une des revendications précédentes, **caractérisé en ce que** le détecteur d'infrarouge (8) et le détecteur de lumière (9) forment une unité de détecteur et **en ce que** plusieurs unités de détecteur (16a, 16b, 16c, 16d) sont prévues.

11. Véhicule robot selon la revendication 10, **caractérisé en ce que** les unités de détecteur (16a, 16b, 16c, 16d) sont réparties le long d'un axe transversal (Q) du véhicule (1) qui est orienté transversalement par rapport à l'axe du véhicule qui s'étend dans le sens d'avancement du véhicule.

12. Véhicule robot selon la revendication 11, **caractérisé en ce que** les unités de détecteur (16a, 16b, 16c, 16d) sont disposées les unes à côté des autres, de préférence à intervalles réguliers, directement sur l'axe transversal (Q) du véhicule (1).

13. Véhicule robot selon l'une des revendications 10 à 12, **caractérisé en ce qu'**au moins l'une desdites unités de détecteur (16a, 16b, 16c, 16d), de préférence un groupe d'unités de détecteur (16a, 16b, 16c, 16d) et en particulier chacune des unités de détecteur (16a, 16b, 16c, 16d) est associé à au moins un émetteur (10) qui émet le rayonnement infrarouge et/ou la lumière dans le spectre visible.

14. Véhicule robot selon l'une des revendications 10 à 12, **caractérisé en ce que** les moyens de commande (7) sont configurés pour reconnaître à l'aide de critères de décision qui résultent de l'association particulière entre les intensités (13, 14) mesurées par les détecteurs des unités de détecteur (16a, 16b, 16c, 16d) une limite (15) entre deux parties (11a, 11b) de nature différente du sol.

15. Véhicule robot selon la revendication 14, **caractérisé en ce que** les moyens de commande (7) sont configurés pour commander les moyens d'entraînement (5) de telle sorte que le véhicule robot (1) se déplace le long de la limite (15) et/ou ne quitte pas une surface de travail.

16. Véhicule robot selon l'une des revendications 14 ou 15, **caractérisé en ce que** les moyens de commande (7) sont configurés pour commander les moyens d'entraînement (5) de telle sorte que le véhicule robot (1) parcoure simultanément les deux parties (11a, 11b) du sol.

17. Véhicule robot selon l'une des revendications précédentes, **caractérisé en ce que** le véhicule robot (1) est une tondeuse dotée d'un ensemble de tonte.

18. Véhicule robot selon la revendication 17, **caractérisé en ce que** la tondeuse présente des moyens de branchement et de débranchement de l'ensemble de tonte (2) en fonction des intensités (13, 14) mesurées et en particulier en fonction de la détection d'un objet et/ou d'un être vivant par les moyens de commande (7).

19. Procédé de commande de moyens d'entraînement (5) en vue de déplacer un véhicule robot, en particulier un véhicule robot configuré pour fonctionner de manière autonome, sur un sol (11), les moyens d'entraînement (5) étant commandés en fonction de l'intensité mesurée d'un rayonnement infrarouge réfléchi par le sol (11), **caractérisé en ce que**
les moyens d'entraînement (5) sont commandés en fonction de l'intensité mesurée d'un rayonnement lumineux dans la partie visible du spectre réfléchi par le sol (11).
